# EUROPÄISCHE PATENTSCHRIFT

(11) **EP 0 584 538 B1**
(45) Veröffentlichungstag und Bekanntmachung des Hinweises auf die Patenterteilung: **27.12.1995**
(21) Anmeldenummer: 93111787.3
(22) Anmeldetag: 23.07.1993
(51) Int. Cl.: F16M 13/04, H04B 1/38, G08B 3/10

(54) **Halteclip für ein tragbares elektronisches Gerät**
Fastening clip for a portable electronic apparatus
Pince de fixation pour un appareil électronique portable

(30) Priorität: 28.08.1992 DE 4228632
(43) Veröffentlichungstag der Anmeldung: 02.03.1994
(73) Patentinhaber: Grundig E.M.V. Elektro-Mechanische Versuchsanstalt Max Grundig GmbH & Co. KG, 90762 Fürth (DE)
(72) Erfinder: Henning, Johannes F., GRUNDIG E.M.V., D-90748 FÜRTH (DE)

(56) Entgegenhaltungen:
- EP-A- 0 298 759
- EP-A- 0 371 273
- EP-A- 0 454 197
- DE-A- 2 300 502
- US-A- 3 743 147
- US-A- 3 956 701
- US-A- 5 097 997

## Beschreibung

Die Erfindung bezieht sich auf ein tragbares elektronisches Gerät der Kommunikationstechnik und/oder der Unterhaltungselektronik, insbesondere ein schnurloses Telefongerät, mit einem Halteclip nach dem Oberbegriff des Anspruchs 1.

Elektronische Geräte, die nicht basisgebunden sind, werden vom Gerätebenutzer häufig, an der Kleidung befestigt oder in Taschen gesteckt, mit herumgetragen. Dies trifft insbesondere für ein von der Basisstation unabhängiges Telefongerät zu, das in einem Umkreis von etwa 200 m von der Basisstation betrieben werden kann. Gerade aber bei solchen Telefongeräten ist eine bestimmte Gerätegröße nicht zu unterschreiten, weil der Ohr-Mundabstand des Menschen vorgegeben ist. Allein aus dieser Tatsache heraus ergibt sich eine Gehäuseform, deren Länge etwa dem vierfachen der Breite bzw. der Höhe entspricht. Wegen dieser Abmessungen und auch wegen des relativ großen Gewichtes, ist ein Tragen in der Kleidung des Gerätebenutzers fast nicht mehr möglich. Zwangsläufig muß das Gerät, soll es nicht in der Hand getragen werden, außerhalb der Kleidung befestigt werden. Es sind zu diesem Zweck bereits verschiedenartige Befestigungsmöglichkeiten, wie Trageschlaufen, Klammern, Steckvorrichtungen, Clips usw. bekannt.

So ist beispielsweise aus DE-C3-23 00 502 ein tragbarer, gegebenenfalls mit einem Rundfunkempfänger kombinierter Rufempfänger bekannt. Dabei handelt es sich um ein Gerät mit einem Gehäuse, das durch eine Trennwand in zwei Abteile unterteilt wird, in denen sich der Empfänger als komplette auswechselbare Einheit und ein integriertes akustisches Horn befinden. Die Form des Gehäuses ist so, daß die Länge wesentlich größer als die Breite und Dicke ist. Damit das Gerät handunabhängig vom Benutzer herumgetragen werden kann, befindet sich auf seiner Rückseite eine Klammer, mit der er es z.B. am Gürtel befestigen kann. Die Lage des Gerätes ist dabei so, daß seine Längsachse parallel zur Längsachse des Benutzers liegt. Eine andere Lage ist nicht möglich.

Weiterhin ist aus EP-A2-0 298 759 ein Gehäuse und ein Halter für Kommunikations-Apparate bekannt, das ebenfalls an der Kleidung eines Gerätebenutzers getragen werden kann. Das Gehäuse des Apparates ist breiter als lang. Es wird so am Körper getragen, daß seine Breite entlang des Gürtels des Gerätebenutzers verläuft. Zum Zwecke der Befestigung, beispielsweise an einem Gürtel, ist ein am Gehäuse aufsteckbarer und abnehmbarer Clip vorhanden. Der Clip ist allerdings sehr aufwendig gestaltet. Er besteht aus einem Grundteil, das, das Gehäuse umgreifend, schnappbar mit diesem verbunden ist und einem gelenkartig mit diesem Grundteil verbundenen Schließteil. Zwischen beiden Teilen befindet sich eine Feder, die das Schließteil mit einer gewissen Kraft gegen das Grundteil drückt, bzw. die Haltekraft des Clips an der Kleidung des Benutzers aufbringt. Die Lage des Gehäuses im festgeclipsten Zustand ist immer gleich.

Auch aus EP-A2-0 371 273 ist ein tragbares, batteriebetriebenes Gerät bekannt, das ebenfalls einen Clip zum Halten des Gerätes am Gürtelbund des Benutzers besitzt. Der Clip ist fest mit dem Gerätegehäuse verbunden. Es ist so gestaltet, daß er bei Nichtbenutzung der Kopfhörer als Halterung für diese dient. Auch dieser Clip legt die Lage des Gerätes zum Gerätebenutzer fest.

Die feste Lage der Geräte am Körper des Benutzers kann beim Tragen jedoch zu Schwierigkeiten führen. Betrachtet man beispielsweise den Rufempfänger aus DE-C3-23 00 502, der so am Gürtel befestigt ist, daß seine Längsachse parallel zur Längsachse des Benutzers liegt, so hat er beim Stehen und Gehen des Benutzers eine sichere und stabile Lage. Setzt sich der Benutzer jedoch, so kann das vom Gürtel nach unten ragende Gerät auf den Oberschenkeln aufstehen, zu Unbequemlichkeiten führen, oder sogar soweit nach oben geschoben werden, daß die Klammer den Gürtelbereich verläßt und das Gerät herunterfällt.

Zu ähnlichen, wegen des ungünstigeren Verhältnisses von Länge zur Breite eventuell noch größeren, Schwierigkeiten wird es kommen, wenn es sich bei dem tragbaren Gerät um ein schnurloses Telefon handelt. Ist die Befestigungsvorrichtung am Telefon so angebracht, daß dieses senkrecht am Benutzer hängt, so führt dies unweigerlich zu den geschilderten Schwierigkeiten. Bedingt eine anders angebrachte Befestigungsvorrichtung jedoch eine waagerechte Lage des Telefons, so ist zwar ein einwandfreies Sitzen möglich, beim Gehen oder Stehen ist die Lage des Gerätes am Gürtel aber sehr labil, weil der Geräteschwerpunkt nur unzureichend weit unter dem Auflagepunkt Clip zu Gürtel liegt. Je nach dem, ob der Gerätebenutzer geht oder sitzt, wäre eine entsprechend zugeordnete Lage des Gerätes an seinem Körper von Vorteil.

Aus der US-A-5 097 997, auf der der Oberbegriff des Anspruchs 1 basiert, ist ein Halteclip für kleine tragbare elektronische Geräte, insbesondere TENS (Transcutaneous Electrical Nerve Stimulators) bekannt, mit dem wahlweise eine senkrechte oder waagrechte Befestigung an der Kleidung des Gerätebenutzers ermöglicht wird. Hierzu weist der längliche und im Querschnitt U-förmig ausgestaltete Halteclip an den kurzen Schenkeln Rastnasen auf, welche in entsprechend angeordnete Nuten des Gerätes greifen. Auf der dem tragbaren Gerät entgegengesetzten Seite weist der Halteclip zwei durch einen Steg miteinander verbundene Halteplatten auf, welche zueinander parallel und mit einem Höhenversatz sowie seitlich zueinander versetzt angeordnet sind. Dadurch wird ein diagonal verlaufender Schlitz im Halteclip ausgestaltet, durch den ein Gürtel senkrecht oder waagerecht gezogen werden kann.

Weiterhin ist aus der EP-A1-0 454 197 ein Universal-Clip für transportable Geräte zur wahlweise senkrecht oder waagerechten Befestigung an der Kleidung des Gerätebenutzers bekannt. Der Clip hat eine L-Form und ist mittels eines Scharniers mit dem Gerät verbunden, wobei Federn am Scharnier den Clip gegen das Gerät drücken. Der Haltepunkt für die Halteplatte liegt dabei asymmetrisch.

Aufgabe der Erfindung ist es daher, eine Befestigungsmöglichkeit eines tragbaren elektronischen Gerätes an der Kleidung eines Gerätebenutzers zu schaffen, die eine eindeutige und sichere, wahlweise senkrechte oder waagerechte Lage des Gerätes ermöglicht. Die Befestigungseinrichtung sollte möglichst wirtschaftlich herstellbar sein.

Diese Aufgabe wird durch die Merkmale des Anspruchs 1 gelöst. Die Unteransprüche zeigen vorteilhafte Ausführungsarten der Erfindung auf.

Nach Anspruch 2 ist das Material, aus dem der Halteclip gefertigt ist, Kunststoff Aus funktechnischen Gründen darf die Halterung eines schnurlosen Telefons kein Metall enthalten.

Die Lage des Distanzstückes ist nach Anspruch 3 so festgelegt, daß der Schwerpunkt des Gerätes immer unterhalb des Distanzstückes liegt. Damit ist bei am Gürtel des Benutzers befestigtem Gerät immer eine stabile Lage garantiert.

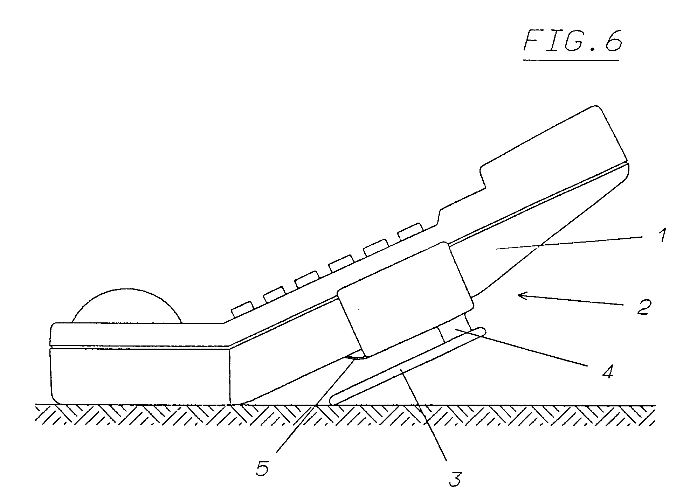

Anspruch 4 legt die Lage einer Kante der Halteplatte zum Schwerpunkt des Gerätes fest. Damit wird eine vorteilhafte Gerätelage, wie in Figur 6 gezeigt, ermöglicht.

Die Merkmale des Anspruchs 5 garantieren einen spielfreien Sitz des Halteclips am tragbaren Gerät, was für eine sichere Befestigung des Gerätes am Gürtel des Benutzers äußerst wichtig ist.

Eine wirtschaftliche Herstellung der Befestigungseinrichtung, wie in der Aufgabenstellung gefordert, wird nach Anspruch 6 erreicht, wenn der Halteclip einstückig gefertigt wird.

Die Erfindung wird nun anhand der Zeichnungen näher erläutert.

Es zeigen:
- Fig. 1: den Halteclip, an einem schnurlosen Telefon befestigt, in Seitenansicht,
- Fig. 2: die selbe Ausführung in einer Draufsicht,
- Fig. 3: eine Schnittdarstellung entlang der Linie A-A aus Fig. 1,
- Fig. 4: eine Profilansicht des Halteclips,
- Fig. 5: den Halteclip, in die das Gerät aufnehmende Öffnung gesehen,
- Fig. 6: die Einheit aus Fig. 1 auf einer ebenen Unterlage liegend,
- Fig. 7: die senkrechte Lage und
- Fig. 8: die waagerechte Lage des schnurlosen Telefons am Körper eines Benutzers.

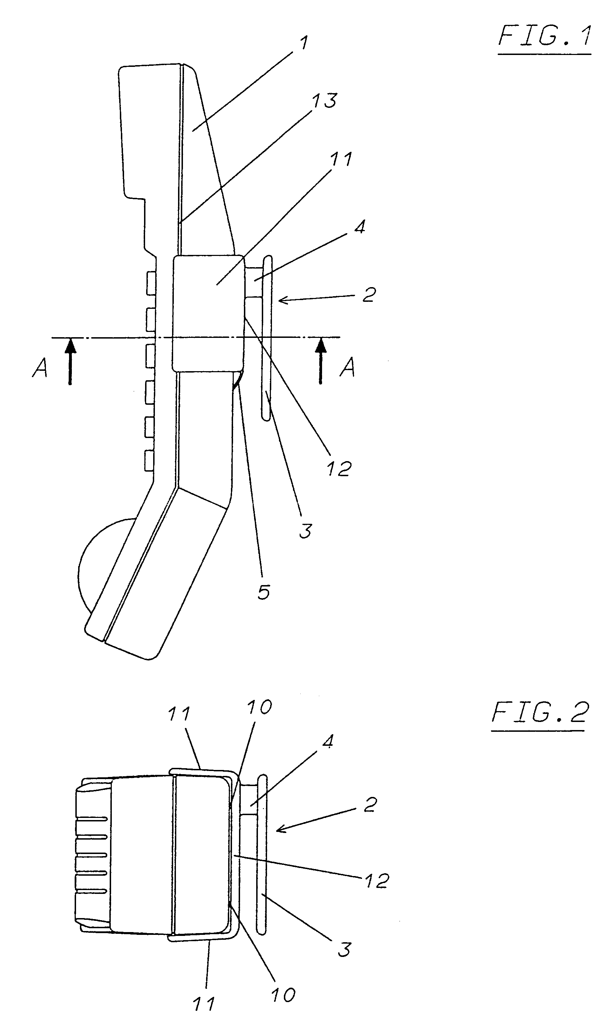

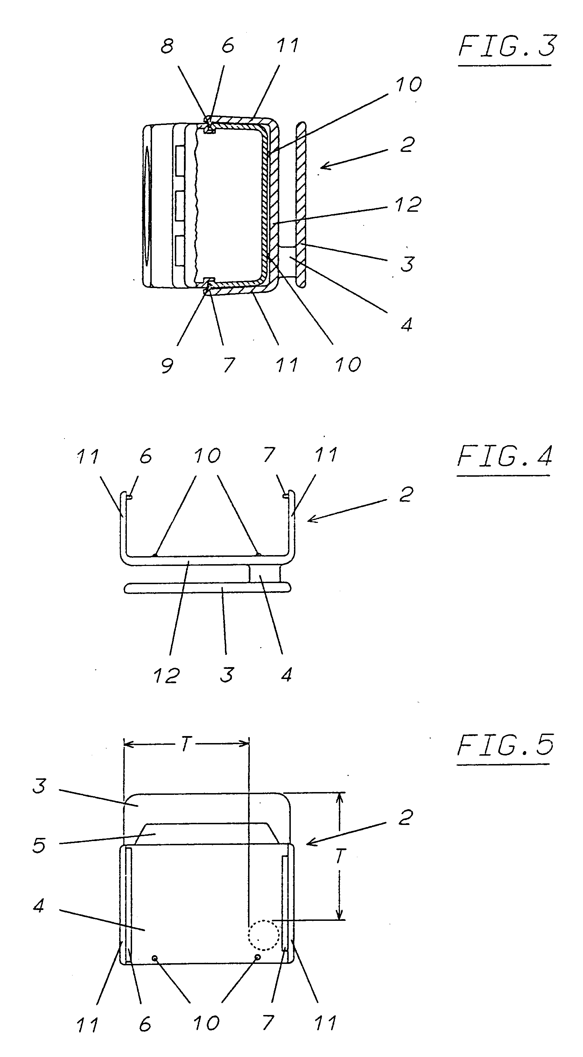

Die Fig. 1 zeigt ein schnurloses Telefon 1 mit daran befestigtem Halteclip 2 in der Seitenansicht. Die beiden Seitenwände 11 umgreifen das Gehäuse des Telefons bis zu der das zweiteilige Gehäuse trennenden Trennfuge 13 und schnappen dort mit Rippen 6 und 7 (Fig. 4) in nicht näher gezeichnete Nuten ein. Von der Rückwand 12 ausgehend, drückt eine Blattfeder 5 gegen das Gehäuse und sorgt somit für einen spielfreien Sitz des Halteclips 2 auf dem Gehäuse. Durch ein Distanzstück 4 beabstandet, befindet sich auf dem Halteclip eine Halteplatte 3. Das komplette Gerät kann nun mit der Halteplatte 3 z.B. hinter den Gürtel eines Gerätebenutzers geschoben werden, so daß der Gürtel in dem Raum zwischen Rückwand 12 und Halteplatte 3 liegt. In der gezeichneten Ausführung ist die Halteplatte 3 parallel zu der Rückwand 12. In einer anderen, nicht gezeichneten Ausführung, kann die Halteplatte aber auch so angebracht sein, daß der sich zwischen Halteplatte 3 und Rückwand 12 befindliche Raum sich nach unten zu verjüngt, so daß die Halteplatte beim Anstecken des Gerätes an die Kleidung eines Benutzers als Feder wirkt.

Das Distanzstück 4 liegt an der Oberkante des Gürtels auf. Die Lage des Distanzstückes 4 ist so gewählt, daß der Schwerpunkt des Gerätes weit unterhalb desselben liegt und damit das an einem Gürtel hängende Gerät eine stabile Lage einnimmt.

Die Fig. 2 zeigt eine Draufsicht auf das in Fig. 1 gezeigte komplette Gerät. An der Innenseite der Rückwand 12 befinden sich zwei Erhebungen 10, die am Gehäuse anliegen und zusammen mit der Blattfeder 5 für spielfreien Sitz des Halteclips 2 am Gerät 1 sorgen.

Eine Schnittdarstellung entlang der Linie A-A aus Fig. 1 zeigt die Fig. 3. Hier sind die beiden Rippen 6 und 7 zu erkennen, die in Nuten 8 und 9 im Gehäuse eingreifen. Zusammen mit den Erhebungen 10 und der Blattfeder 5 wird die gewünschte sichere Befestigung des Halteclips am Gehäuse erreicht. Die Länge der Blattfeder erstreckt sich nahezu über die gesamte Breite des Halteclips. Durch die bogenförmige Gestaltung der Blattfeder wird ein problemloses Einfädeln des Haltecllps in den Gürtel erreicht.

In den beiden Figuren 4 und 5 ist der erfindungsgemäße Halteclip 2 in zwei Ansichten dargestellt. Die beiden Rippen 6 und 7 an den Seitenwänden 11 sind unterschiedlich lang. Da sie am Gehäuse des Gerätes in zwei ihrer jeweiligen Länge entsprechende Nuten 8 und 9 eingreifen, ist die Lage des Halteclips am Gehäuse eindeutig. Das Distanzstück 4 ist asymmetrisch an der Rückwand angebracht. Die Halteplatte 3 erstreckt sich nun so von dem Distanzstück weg, daß die beiden weiter entfernten Kanten der Halteplatte einen gleichen Abstand T zum Distanzstück aufweisen. Die Lage des Distanzstücks 4 zum Schwerpunkt des kompletten Gerätes, ist nun so, daß das Gerät in senkrechter, wie in waagerechter Lage immer stabil am Gürtel eines Benutzers befestigt werden kann.

In Fig. 6 ist das komplette Gerät in einer möglichen Lage auf einer ebenen Unterlage gezeigt. Die auf der Unterlage aufliegende Kante der Halteplatte 3 befindet sich in der gezeichneten Darstellung rechts vom Geräteschwerpunkt. Damit ist eine für den Gerätebenutzer übersichtliche Lage des Gerätes möglich.

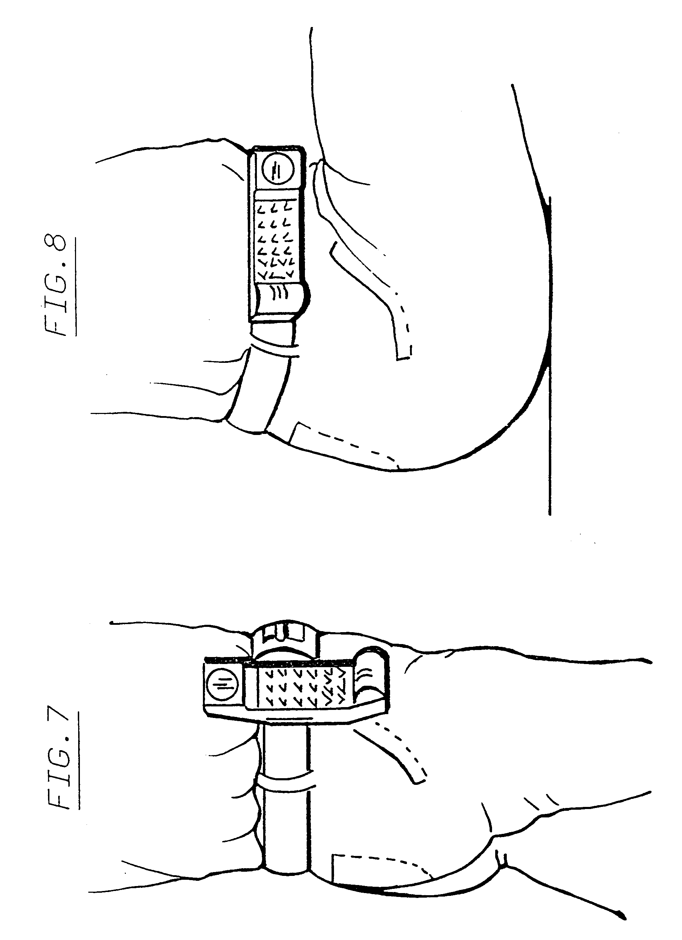

Die Fig. 7 zeigt die senkrechte Lage eines am Gürtel eines Benutzers befestigten Gerätes mit dem erfindungsgemäßen Halteclip, während die Fig. 8 dasselbe Gerät in waagerechter Lage darstellt.

## Patentansprüche

1. Tragbares elektronisches Gerät (1) der Kommunikationstechnik und/oder der Unterhaltungselektronik, insbesondere ein schnurloses Telefongerät (1), mit einem Halteclip (2) zur Befestigung desselben wahlweise senkrecht oder waagerecht an der Kleidung eines Gerätebenutzers, wobei das tragbare Gerät (1) von dem Halteclip (2) an drei Seiten umgriffen wird und der Halteclip (2) mittels Rippen (6, 7) in Nuten (8, 9) des tragbaren Gerätes (1) eingeschnappt ist und auf der dem tragbaren Gerät (1) entgegengesetzten Seite beabstandet, mindestens eine Halteplatte (3) aufweist, **dadurch gekennzeichnet**, daß zur wahlweise senkrechten oder waagerechten Befestigung des Halteclips (2) an der Kleidung des Gerätebenutzers die einzige Halteplatte (3) von einem Distanzstück (4) beabstandet ist, welches sich zur Befestigung der Halteplatte (3) asymmetrisch zur Rückwand (12) des Halteclips (2) befindet und daß die Rippen (6, 7) unterschiedlich lang sind und in entsprechend lange Nuten (8, 9) des tragbaren Gerätes (1) eingreifen.

2. Tragbares elektronisches Gerät mit Halteclip nach Anspruch 1, **dadurch gekennzeichnet**, daß das Material aus dem der Halteclip (2) hergestellt ist, Kunststoff ist.

3. Tragbares elektronisches Gerät mit Halteclip nach Anspruch 1, **dadurch gekennzeichnet**, daß sich das Distanzstück (4) außerhalb des Schwerpunktes des tragbaren Gerätes befindet.

4. Tragbares elektronisches Gerät mit Halteclip nach einem oder mehreren der Ansprüche 1 - 3, **dadurch gekennzeichnet**, daß sich die, in Längsrichtung gesehen, gegenüber dem Distanzstück (4) liegende Kante der Halteplatte (3) außerhalb des Geräteschwerpunkts und auf der gleichen Seite zu diesem wie das Distanzstück (4) befindet.

5. Tragbares elektronisches Gerät mit Halteclip nach einem oder mehreren der Ansprüche 1 - 4, **dadurch gekennzeichnet**, daß der Halteclip an seiner Rückseite, dem tragbaren Gerät (1) zugewandt, mindestens zwei Erhebungen (10) und eine Blattfeder (5) aufweist, um einen spielfreien Sitz des Halteclips (2) auf dem tragbaren Gerät (1) zu gewährleisten.

6. Tragbares elektronisches Gerät mit Halteclip nach einem oder mehreren der Ansprüche 1 - 5, **dadurch gekennzeichnet**, daß der Halteclip einstückig gefertigt ist.

## Claims

1. Portable electronic device (1) in the field of communications and/or consumer electronics, in particular a cordless telephone (1), with a holding clip (2) for fastening said device either vertically or horizontally to the clothing of a user of the device, the portable device (1) being embraced on three sides by the holding clip (2) and the holding clip (2) being snapped by means of ribs (6, 7) into grooves (8, 9) of the portable device (1) and having at least one holding plate (3) disposed at a distance on the side opposite the portable device (1), **characterized in that** for either vertical or horizontal fastening of the holding clip (2) to the clothing of the user of the device, the single holding plate (3) is distanced by a distance piece (4) which, for fastening of the holding plate (3), is situated asymmetrically relative to the back wall (12) of the holding clip (2), and that the ribs (6, 7) differ in length and engage into grooves (8, 9) of corresponding length in the portable device (1).

2. Portable electronic device with a holding clip according to claim 1, characterized in that the material from which the holding clip (2) is manufactured is plastic.

3. Portable electronic device with a holding clip according to claim 1, characterized in that the distance piece (4) is situated outside of the centre of gravity of the portable device.

4. Portable electronic device with a holding clip according to one or more of claims 1 - 3, characterized in that the edge of the holding plate (3) lying - viewed in longitudinal direction - opposite the distance piece (4) is situated outside of the centre of gravity of the device and on the same side of said centre of gravity as the distance piece (4).

5. Portable electronic device with a holding clip according to one or more of claims 1 - 4, characterized in that the holding clip has at its rear side, facing the portable device (1), at least two raised portions (10) and a leaf spring (5) in order to guarantee a tight fit of the holding clip (2) on the portable device (1).

6. Portable electronic device with a holding clip according to one or more of claims 1 - 5, characterized in that the holding clip is manufactured as a single piece.

## Revendications

1. Appareil électronique portable (1) de la technique de communication et/ou de l'électronique du spectacle, notamment téléphone sans fil (1), comportant une pince de fixation (2) servant à fixer l'appareil au choix verticalement ou horizontalement aux vêtements d'un utilisateur de l'appareil, l'appareil portable (1) étant enserré par la pince de fixation (2) sur trois côtés, et la pince de fixation (2) étant encliquetée au moyen de nervures (6,7) dans des rainures (8,9) de l'appareil portable (1) et comportant au moins une plaque de fixation (3), située à distance sur le côté opposé à l'appareil portable (1), caractérisé par le fait que pour la fixation au choix verticale ou horizontale de la pince de fixation (2) sur le vêtement de l'utilisateur de l'appareil, la plaque unique de fixation (3) est maintenue à distance par une entretoise (4), qui, pour la fixation de la plaque de fixation (3) est disposée de façon dissymétrique par rapport à la paroi arrière (12) de la pince de fixation (2) et que les nervures (6,7) ont des longueurs différentes et s'engagent dans des rainures de longueur correspondante (8,9) de l'appareil portable (1).

2. Appareil électronique portable comportant une pince de fixation selon la revendication 1, caractérisé en ce que le matériau, avec lequel est réalisée la pince de fixation (2), est une matière plastique.

3. Appareil électronique portable comportant une pince de fixation selon la revendication 1, caractérisé en ce que l'entretoise (4) est située en dehors du centre de gravité de l'appareil portable.

4. Appareil électronique portable comportant une pince de retenue selon une ou plusieurs des revendications 1 à 3, caractérisé en ce que le bord de la plaque de fixation (3), qui est situé au-dessus de l'entretoise (4) lorsqu'on regarde dans la direction longitudinale, est situé en dehors du centre de gravité de l'appareil et du même côté de ce dernier que l'entretoise (4).

5. Appareil électronique portable comportant une pince de retenue selon une ou plusieurs des revendications 1 à 4, caractérisé en ce que la pince de fixation comporte, sur son côté arrière, qui est tourné vers l'appareil portable (1), au moins deux parties surélevées (10) et un ressort à lame (5), pour garantir un appui sans jeu de la pince de fixation (2) sur l'appareil portable (1).

6. Appareil électronique portable comportant une pince de fixation selon une ou plusieurs des revendications 1 à 5, caractérisé en ce que la pince de fixation est réalisée d'un seul tenant.
